# EUROPÄISCHE PATENTSCHRIFT

(11) **EP 2 347 138 B1**
(45) Veröffentlichungstag und Bekanntmachung des Hinweises auf die Patenterteilung: **25.02.2015**
(21) Anmeldenummer: 09748937.1
(22) Anmeldetag: 11.11.2009
(51) Int. Cl.: F16B 7/18

(54) **VORRICHTUNG ZUM VERBINDEN VON ZWEI PROFILSTÜCKEN**
DEVICE FOR CONNECTING TWO PROFILES
DISPOSITIF POUR RACCORDER DES TUBES PROFILÉS

(30) Priorität: 21.11.2008 CH 18172008; 05.12.2008 CH 19062008
(43) Veröffentlichungstag der Anmeldung: 27.07.2011
(73) Patentinhaber: Syma Intercontinental AG, 9533 Kirchberg (CH)
(72) Erfinder: STRÄSSLE, Marcel, CH-9533 Kirchberg (CH); ZÜLLIG, Kurt, CH-9533 Kirchberg (CH)
(74) Vertreter: Frischknecht, Harry Ralph
(86) Internationale Anmeldenummer: PCT/CH2009/000356
(87) Internationale Veröffentlichungsnummer: WO 2010/057324

(56) Entgegenhaltungen:
- EP-A2- 0 506 607
- DE-A1- 19 614 084
- DE-U1- 7 831 438
- DE-U1- 20 115 618
- DE-U1- 29 618 079

## Beschreibung

### TECHNISCHES GEBIET

Die vorliegende Erfindung betrifft eine Vorrichtung zum Verbinden von zwei Profilstücken.

### STAND DER TECHNIK

Aus dem Stand der Technik sind eine Vielzahl von Systemen zur Verbindung von zwei Profilelementen oder Profilstücken bekannt. Im Bereich des Messe- oder Ausstellungsbaus dienen solche Profile der Bereitstellung von Messeständen, Bauten und weiteren Gebilden.

Die Profile werden dabei mittels Profilelementen verbunden. Beispielsweise ist aus der EP 0 506 607 ein Verbindungselement zur Verbindung von einem ersten mit einem zweiten Profil bekannt.

Die aus dem Stand der Technik bekannten Vorrichtungen weisen bereits gute Eigenschaften und bieten dem Benutzer eine Vielzahl von Möglichkeiten. Allerdings werden vom Benutzer alternative Verbindungsstücke gefordert, welche die Flexibilität beim Zusammenbauen erhöhen sollen. Ferner werden auch einfacher handhabbare Verbindungsstücke gefordert.

DE 196 14 084, DE 78 31 438, DE 201 15 618 und DE 296 18 079 zeigen alle Vorrichtungen zur Verbindung von Profilen. Die aus dem Stand der Technik bekannten Vorrichtungen sind in der Handhabung allerdings vergleichsweise kompliziert.

### DARSTELLUNG DER ERFINDUNG

Ausgehend von diesem Stand der Technik liegt der Erfindung die Aufgabe zugrunde, ein alternatives Verbindungselement zu schaffen, welches einfacher handhabbar ist.

Eine solche Aufgabe löst das Verbindungselement nach Anspruch 1. Demgemäss dient ein Verbindungselement zum lösbaren Verbinden zweier entlang ihrer jeweiligen Längsachse parallel verlaufender Abschnitte von Profilen, die aufeinanderzugewandte Oberflächen aufweisen, in denen jeweils ein länglich hinterschnittener Kanal vorgesehen ist. Das Verbindungselement weist ein erstes Klemmelement und ein zweites Klemmelement auf. Das erste Klemmelement verfügt über zwei gegenüberliegende äussere Anschlagflächen für die besagten Abschnitte der beiden Profile, wobei die entsprechenden gegenüberliegenden Anschlagflächen des zweiten Klemmelementes mit denen des ersten Klemmelementes fluchten. Jedes Klemmelement umfasst mindestens ein Verbindungsstück, welches aus einer der Anschlagflächen herausragt und eine auf die Ebene der besagten Anschlagfläche gerichtete Klemmseite aufweist. Mindestens jeweils ein Verbindungsstück steht aus einer anderen der gegenüberliegenden Anschlagflächen über, so dass diese in den Kanal des einen Profilstückes und das andere in den Kanal des anderen Profilstückes einragen können. Das erste Klemmelement ist bezüglich dem zweiten Klemmelement in der Richtung der Ebene der Anschlagflächen verschieblich. Zudem ist ein Betätigungselement vorgesehen ist, welches die Relativbewegung der Klemmelemente zueinander begrenzt und mit dem der Abstand der Klemmelemente für ein Hintergreifen der Profilabschnitte durch die Klemmseiten für eine Klemmverbindung zueinander einstellbar ist.

Vorzugsweise ist weiterhin ein Element vorgesehen, um eine Relativbewegung zwischen den beiden Klemmelementen, insbesondere voneinander weg, zu unterstützen bzw. bereitzustellen.

Vorzugsweise ist das die Relativbewegung unterstützende Element ein Sicherungsring, welcher mit dem Betätigungselement derart in Verbindung steht, dass dieses bezüglich einer Bewegung in Richtung seiner Mittelachse fest mit dem zweiten Klemmelement, aber um die Mittelachse zum Klemmelement drehbar, verbunden ist.

Vorzugsweise ist das die Relativbewegung unterstützende Element ein Federmittel, welches zwischen dem ersten Klemmelement und dem zweiten Klemmelement angeordnet ist, und so die beiden Klemmelemente auseinanderdrückt.

Vorzugsweise weist mindestens ein Verbindungsstück eine auf die Ebene der besagten Anschlagfläche gerichtete Halteseite auf, die bezüglich der Klemmseite auf der anderen Seite am Verbindungsstück vorgesehen ist.

Ein Verbindungsstück umfasst vorzugsweise eine Klemmseite und eine Halteseite. Alternativ kann ein Verbindungsstück aber auch nur eine Klemmseite oder nur eine Halteseite umfassen, wobei in dem Falle ein weiteres Verbindungsstück die Halteseite bzw. die Klemmseite umfasst.

Vorzugsweise ist die Klemmseite im Querschnitt gesehen hakenförmig ausgebildet, wobei sich eine erste Fläche senkrecht zur Ebene der Anschlagfläche und eine sich der ersten Fläche anschliessende zweite Fläche parallel oder in einem flachen Winkel im Bereich von 1° bis 10°, insbesondere in einem Bereich von 3° bis 8°, besonderes bevorzugt bei 5°, zur Anschlagfläche verläuft, wobei der Kanal mit der zweiten Fläche der Klemmseite hintergreifbar ist.

Vorzugsweise umfasst die Halteseite eine Ausnehmung, wobei der Kanal mit der Ausnehmung hintergreifbar ist.

Bevorzugterweise ist die zweite Fläche der Klemmseite fluchtend mit Teilen der Ausnehmung der Halteseite, insbesondere mit den Flächen, welche parallel zur Anschlagsfläche ausgerichtet sind, angeordnet.

Vorzugsweise verfügt jedes Klemmelement über mindestens ein Paar von Verbindungsstücken, wobei jeweils ein Verbindungsstück die eine Anschlagfläche überragt und wobei das andere Verbindungsstück die andere Anschlagfläche überragt, welche der vorherigen gegenüberliegend angeordnet ist.

Vorzugsweise sind in Richtung der Anschlagfläche mehrere paarweise angeordnete Verbindungsstücke angeordnet.

Vorzugsweise sind die Anschlagflächen die Oberflächen eines quaderförmigen Basiselementes, wobei die Verbindungsstücke dem Basiselement angeformt sind und sich über diese Oberflächen vom Basiselement erstrecken.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Verbindungselementes nach der vorliegenden Erfindung gemäss einem ersten Ausführungsbeispiel;
- Fig. 2: eine Explosionsdarstellung der Figur 1;
- Fig. 3: eine perspektivische Darstellung des Verbindungselementes nach Figur 1, wobei das Verbindungselement zwei Profilstücke lose verbindet;
- Fig. 4: eine perspektivische Darstellung des Verbindungselementes nach Figur 1, wobei das Verbindungselement zwei Profilstücke miteinander klemmt;
- Fig. 5: eine perspektivische Ansicht eines Verbindungselementes nach der vorliegenden Erfindung gemäss einem zweiten Ausführungsbeispiel;
- Fig. 6: eine perspektivische Darstellung des Verbindungselementes nach Figur 5, wobei das Verbindungselement zwei Profilstücke miteinander klemmt;
- Fig. 7: eine perspektivische Ansicht eines Verbindungselementes nach der vorliegenden Erfindung gemäss einem dritten Ausführungsbeispiel;
- Fig. 8: eine perspektivische Darstellung des Verbindungselementes nach Figur 7, wobei das Verbindungselement zwei Profilstücke miteinander klemmt; und
- Fig. 9: eine perspektivische Explosionsansicht eines Verbindungselementes nach der vorliegenden Erfindung gemäss einem vierten Ausführungsbeispiel; und
- Fig. 10: eine perspektivische Darstellung des Verbindungselementes nach Fig. 9 im zusammengefügten Zustand.

### BESCHREIBUNG BEVORZUGTER AUSFÜHRUNGSFORMEN

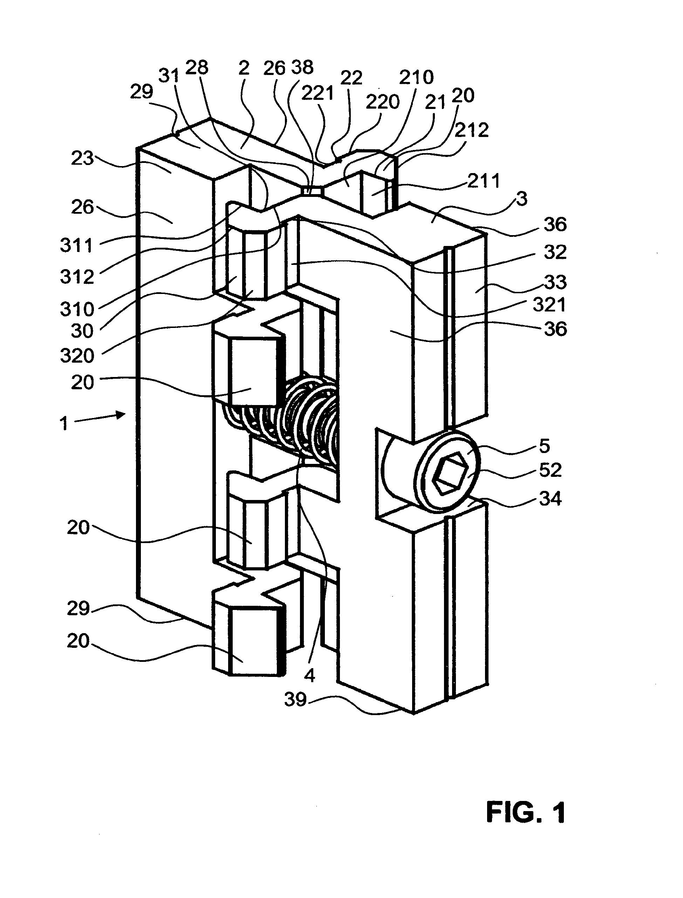

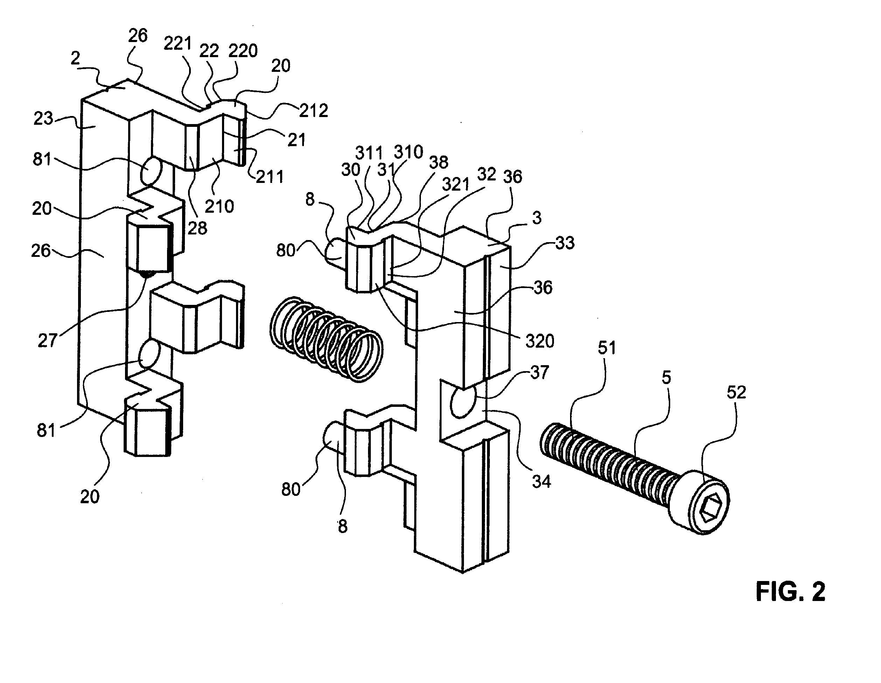

Die Figur 1 zeigt eine erste Ausführungsform eines Verbindungselementes 1 zum lösbaren Verbinden von zwei Profilstücken in einer perspektivischen Darstellung, während Figur 2 die gleiche Ausführungsform in einer Explosionsdarstellung zeigt.

Das Verbindungselement 1 umfasst ein erstes Klemmelement 2, ein zweites Klemmelement 3, und ein Betätigungselement 5. Die beiden Klemmelemente 2, 3 sind relativ zueinander verschiebbar. Ein die Relativbewegung zwischen den beiden Klemmelementen 2 und 3 unterstützendes Element, ist ferner zwischen den beiden Klemmelementen 2 und 3 angeordnet. Hier ist dieses Element exemplarisch als Federmittel 4 dargestellt, welches eine Kraft bereitstellt, welche das erste Klemmelement 2 vom zweiten Klemmelement 3 wegdrückt. Das die Relativbewegung unterstützende Element kann aber auch ein untenstehend beschriebenes Sicherungselement sein. Mit der Betätigung des Betätigungsmittel 5 können die beiden Klemmelemente 2, 3 aufeinander zu bewegt werden.

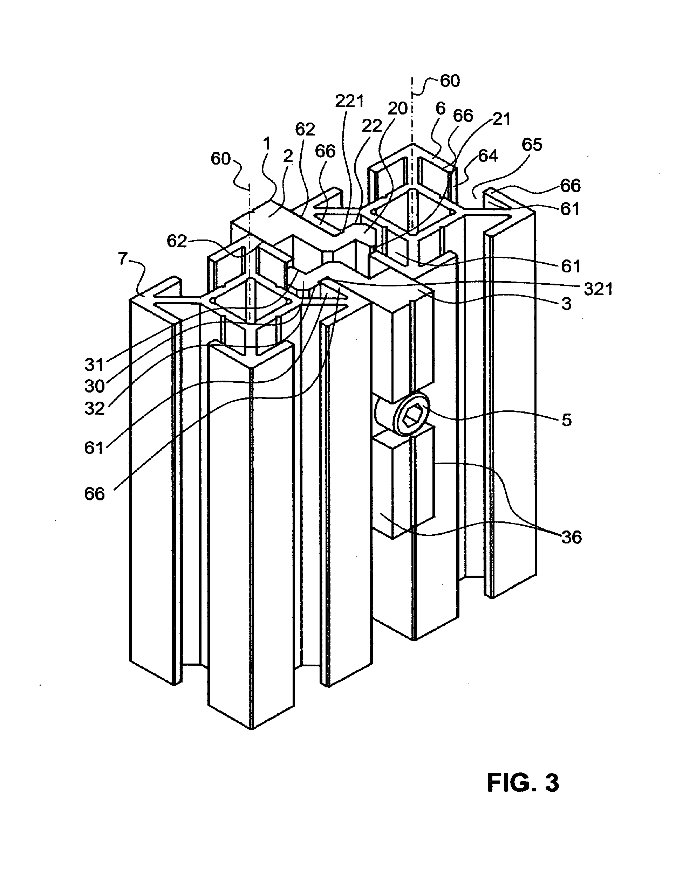

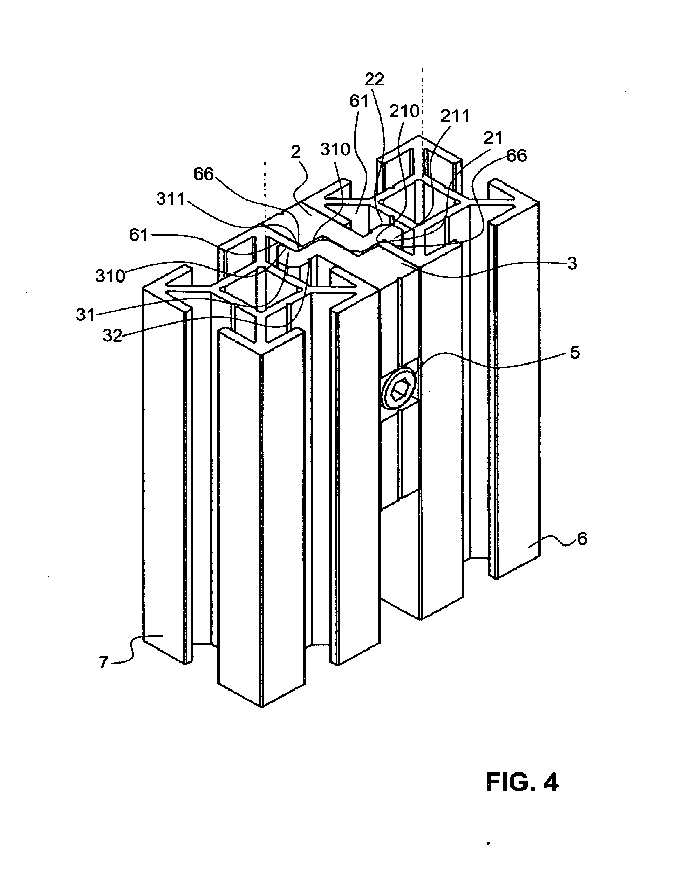

Das Verbindungselement 1 dient zum lösbaren Verbinden von zwei Profilen 6 und 7, wie diese beispielsweise in den Figuren 3 und 4 dargestellt sind. Die Profile 6 erstrecken sich entlang ihrer jeweiligen Längsachse 60 und sind mit jeweils einer Oberfläche 62 parallel zueinander angeordnet. Vor der Oberfläche 62 erstreckt sich zudem ein Kanal 61 in das Profilelement 6, 7 hinein, wobei der Kanal 61 parallel zur Längsachse 60 ausgebildet ist.

Mit Hilfe der Figuren 1 und 2 wird nun das erste Klemmelement 2 erläutert. Das erste Klemmelement 2 umfasst zwei gegenüberliegende äussere Anschlagflächen 26 und mindestens ein Verbindungsstück 20, welches aus mindestens einer der beiden Anschlagflächen 26 herausragt. Die Anschlagflächen 26 sind dabei Teil eines im wesentlichen quaderförmigen Basiselementes 23. Die beiden Anschlagflächen 26 liegen parallel zueinander und sind über die Stirnflächen 29 miteinander verbunden. Wenn das Verbindungselement 1 in Verbindung mit den Profilen 6, 7 ist, fluchten die Anschlagflächen 26 mit den Oberflächen 62 der Profile 6 und 7, das heisst, die Anschlagflächen 26 liegen auf den Oberflächen 62 auf.

Die Breite des Verbindungsstücks 20 ist kleiner als die lichte Weite bzw. Breite des Kanals 61, so dass das Verbindungsstück 20 in den Kanal 61 eingeschoben werden kann.

Die Verbindungsstücke 20 erstrecken sich über die Ebene der Anschlagflächen 26 und sind daher in der Lage, sich in den Kanal 61 der Profile 6 und 7 zu erstrecken. Das mindestens eine Verbindungsstück 20 umfasst vorzugsweise eine Klemmseite 21 und eine Halteseite 22. Die Klemmseite 21 ist dann mit dem Kanal 61 im Profil 6 oder 7 im Eingriff, wenn zwischen den beiden Profilen 6 und 7 eine Klemmverbindung hergestellt werden soll. Die Halteseite 22 ist dann mit dem Kanal im Profil 6 oder 7 im Eingriff, wenn zwischen den beiden Profilen 6 und 7 eine Halteverbindung hergestellt werden soll. Unter einer Klemmverbindung wird eine Verbindung zwischen dem Verbindungselement 1 und den beiden Profilen verstanden, welche in der Lage ist grössere Kräfte zu übertragen. Unter einer Halteverbindung hingegen wird eine Verbindung verstanden, welche die beiden Profile derart zueinander hält, dass diese mit einem kleinen Kraftaufwand zueinander verschoben und ausgerichtet werden können.

Die Klemmseite 21 ist im Querschnitt senkrecht zur Anschlagfläche 26 im wesentlichen hakenförmig ausgebildet. Dabei umfasst die Klemmseite 21 eine erste Fläche 210, welche sich im wesentlichen senkrecht zur Anschlagfläche 26 erstreckt. Der ersten Fläche 210 schliesst sich eine zweite Fläche 211 an, welche sich im wesentlichen parallel oder in einem flachen Winkel winklig zur Ebene der Anschlagfläche 26 erstreckt. Der flache Winkel liegt dabei in einem Bereich von 1° bis 10°, insbesondere in einem Bereich von 3° bis 8°, besonderes bevorzugt bei 5°. Dabei erstreckt sich die zweite Fläche 211 derart, dass der Abstand von einem Punkt in senkrechter Richtung auf die Ebene der Anschlagfläche 26 zunimmt. Die erste Fläche 210 und die zweite Fläche 211 bilden dabei den hakenförmigen Teil der Klemmseite. Ferner erstreckt sich die Klemmseite 21 über weitere Flächen 212, welche im wesentlichen eine zum Kanal 61 des Profils 6 komplementäre Form aufweisen. Vorzugsweise sind die weiteren Flächen 212 abgeschrägt ausgebildet, was ein einfaches Einführen desjenigen Abschnittes in den Kanal 61 erlaubt.

Die Halteseite 22 umfasst im wesentlichen eine sich senkrecht zur Anschlagfläche 26 erstreckende Fläche 220, in welche sich eine Ausnehmung 221 erstreckt. Die Ausnehmung 221 ist dabei derart ausgebildet, dass sich Teile der Profile 6 und 7 in diese Ausnehmung 221 erstrecken können, wie dies unten weiter erläutert wird. In einer Richtung senkrecht zur Anschlagfläche 26 gesehen, erstreckt sich die Ausnehmung 221 von der Anschlagfläche 26 bis diese vorzugsweise fluchtend, also in gleicher Ebene liegend, mit der zweiten Fläche 211 der hakenförmigen Klemmseite 21 ist. Mit anderen Worten kann auch gesagt werden, dass Teile der Ausnehmung, also hier die obere Fläche, fluchtend mit der zweiten Fläche 211 liegt.

In einer alternativen Ausführungsform ist es zudem denkbar, dass die Fläche 220 winklig zur Anschlagfläche 26 angeordnet wird, wobei der Winkel zwischen Anschlagfläche 26 und Fläche 220 kleiner als 89° ist. Vorzugsweise ist der Winkel im Bereich von 45° bis 85°. Teile der Profile 6 und 7 können dann durch diesen zulaufenden Winkel gehalten werden.

Das zweite Klemmelement 3 ist im wesentlichen identisch zum ersten Klemmelement 2 ausgebildet. Das zweite Klemmelement 3 umfasst ebenfalls zwei gegenüberliegende äussere Anschlagflächen 36 und mindestens ein Verbindungsstück 30, welches aus mindestens einer der beiden Anschlagflächen 36 herausragt umfasst. Die Anschlagflächen 36 sind auch hier Teil eines Basiselementes 33. Das mindestens eine Verbindungsstück 30 umfasst eine Klemmseite 31 und eine Halteseite 32.

Die Klemmseite 31 ist identisch zur Klemmseite 21 des ersten Klemmelementes 2 ausgebildet und umfasst ebenfalls eine erste Fläche 310, eine zweite Fläche 311 und eine weitere Fläche 212. Die erste Fläche 310 steht im wesentlichen senkrecht zur Ebene der Anschlagfläche 36 und die zweite Fläche 311 verläuft winklig zur Ebene der Anschlagfläche 36.

Die Halteseite 32 ist ebenfalls identisch zur Halteseite 22 des ersten Klemmelementes 2 ausgebildet. Die Halteseite 32 umfasst im wesentlichen einen sich senkrecht oder winklig zur Anschlagfläche 36 erstreckende Fläche 320. Ferner kann eine Ausnehmung 321 angeordnet werden, welche sich von der Fläche 320 in die Halteseite 32 hineinerstreckt.

Weiterhin ist ein Element 4 vorgesehen, welches eine Relativbewegung zwischen den beiden Klemmelementen voneinander weg unterstützt. Ein solches Element kann beispielsweise die in den Figuren gezeigte Feder 4 sein.

Alternativ kann das Betätigungselement 5 auch mit einem Sicherungselement, wie ein Sicherungsring, in Verbindung stehen, wobei der Sicherungsring zusammen mit dem Schraubenkopf 52 die besagte Relativbewegung wie erwähnt einschränkt. Das Sicherungselement ist dabei derart angeordnet, dass das Betätigungselement 5 in Richtung seiner Längsachse zum zweiten Klemmelement 3 fest, aber um die Axialachse drehbar, verbunden ist. Das heisst, dass sich das Betätigungselement 5 zum Klemmelement nicht in Richtung der Längsachse bewegen kann. Ein solches Sicherungselement ist beispielsweise ein Wellensicherungsring, welcher in einer sich über den Umfang des Betätigungselements erstreckende Nut eingefügt werden kann. Dabei ist die Nut derart angeordnet, dass der Sicherungsring auf die Fläche am Klemmelement 3 wirkt, welche gegenüber der Ausnehmung 34 liegt. Dadurch wird das Betätigungselement 5 derart in der Öffnung 37 gehalten, dass dieses um die eigene Mittelachse drehbar ist und bezüglich einer Bewegung in Richtung der Mittelachse fest mit dem Klemmelement 3 in Verbindung steht. Der Schaftabschnitt zwischen dem Schraubenkopf 52 und der Nut ist vorzugsweise zylindrisch mit einer flachen Oberflächenstruktur ausgebildet, so dass eine gute Führung in der Öffnung 37 gewährleistet wird. Alternativ kann die Nut auch direkt in den Gewindeabschnitt 51 der Schraube 5 vorgesehen werden, wobei der Schaftabschnitt hier ebenfalls das Gewinde umfasst.

Alternativ kann das Sicherungselement auch am Klemmelement 3 angeformt sein, wobei hier ebenfalls eine Nut oder Rille im Betätigungselement 5 vorgesehen ist, in welche der Sicherungsring einragen kann.

Ein zwischen dem ersten Klemmelement 2 und dem zweiten Klemmelement 3 angeordnetes Federmittel 4, hier eine Druckfeder 4, drückt die beiden Klemmelement 2 und 3 auseinander. Alternativ könnte das Federmittel auch durch eine oder mehrere Tellerfedern bereitgestellt werden.

Eine Betätigungsmittel 5, hier eine Schraube 5, erstreckt sich durch eine Durchgangsöffnung 37 im zweiten Klemmelement 3 in eine Gewindeöffnung 27 im ersten Klemmelement 2. Die Schraube 5 umfasst ein Gewinde 51 und einen Schraubenkopf 52. Mit einem Werkzeug kann die Schraube betätigt werden, wobei sich die beiden Klemmelemente 2 und 3 relativ zueinander verschieben lassen. In der vorliegenden Ausführungsform liegt die Druckfeder 4 auf dem Gewinde 51 der Schraube 5 auf. Im Bereich der Durchgangsöffnung 37 weist das zweite Klemmenelement 3 zudem eine Ausnehmung 34 auf, welche sich in das Basiselement 33 erstreckt und zur Aufnahme des Schraubenkopfes 52 dient.

Ferner umfasst das Verbindungselement 1 Führungselemente 8. In der vorliegenden Ausführungsform haben die Führungselemente 8 die Form von zylindrischen Führungsstiften 80, welche mit dem zweiten Klemmelement 3 verbunden sind, und in Führungsöffnungen 81 im ersten Klemmelement 2 einragen. Durch das Anordnen von zwei Führungsstiften 80 zueinander kann eine Verdrehung des ersten Klemmelementes 2 zum zweiten Klemmelement 3 verhindert werden.

Das Federmittel 4 wird in dieser Ausführungsform durch die Schraube 5 gehalten. In einer alternativen Ausführungsform wäre es zudem denkbar, dass je ein Federmittel 4 durch die Führungsstifte gehalten werden können. Hierbei wären dann zwei Federmittel 4 angeordnet.

Die Verbindungsstücke 20, 30 sind vorzugsweise paarweise angeordnet. Dabei steht ein Verbindungsstück 20 bzw. 30 über die eine Anschlagfläche 26 bzw. 36 hervor, während das andere Verbindungsstück 20 bzw. 20 über die andere Anschlagfläche 26 bzw. 36 hervorsteht. In der vorliegenden Ausführungsform sind zwei solche paarweise angeordneten Verbindungsstücke 20 bzw. 30 angeordnet, wobei sich je zwei Verbindungsstücke 20 bzw. 30 in die eine Richtung und je zwei Verbindungsstücke 20 bzw. 30 in die andere Richtung erstrecken.

Die einzelnen Verbindungsstücke 20, 30 sind dabei versetzt zueinander angeordnet, wobei zwischen den paarweise angeordneten Verbindungsstücken 20, 30 jeweils das Führungselement 8 angeordnet ist. Ferner sind die Verbindungselemente 20 des ersten Klemmeelementes bezüglich den Verbindungselementen 30 derart zueinander angeordnet, dass jeweils dem Verbindungselement 20 ein Verbindungselement 30 zugeordnet wird, wobei die beiden Verbindungselemente 20, 30 in senkrechter Richtung zur Anschlagfläche gesehen auf gleicher Höhe liegen. Andere Anordnung der Verbindungsstücke 20, 30 zueinander sind ebenfalls denkbar.

Die Verbindungsstücke 20, 30 können auch länger ausgebildet sein. Beispielsweise wäre es denkbar pro Anschlagfläche 26, 36 nur ein einziges Verbindungsstück anzuordnen, welches sich über die halbe Länge des Basiselementes 23, 33 erstreckt.

Vorzugsweise weise die Verbindungsstücke 20, 30 in Richtung der Anschlagsfläche 26, 36 eine Länge auf, die kleiner als die halbe Länge des Klemmelementes 2, 3 ist. Unter der Länge des Klemmelementes wird hier die Distanz zwischen den beiden Stirnflächen 29, 39 verstanden. Insbesondere liegt die Länge der Verbindungsstücke 20, 30 aber im Bereich von 1/8 bis 1/3, besonders bevorzugt 1/6 bis 1/4 der Länge des Klemmelementes 2, 3.

In dem Bereich, in welchem das erste Klemmelement 2 auf das zweite Klemmelement 3 trifft, können bei beiden Klemmelementen 2 und 3 abgeschrägte Kanten 28 und 28 vorgesehen sein, was ein Verklemmen bei der Bewegung des ersten Klemmelementes 2 auf das zweite Klemmelement 3 verhindert.

Wie in der Figur 3 gezeigt, dient das Verbindungselement 1 der Verbindung von zwei Profilen 6 und 7. Die Profile 6 und 7 sind hier baugleich ausgebildet. Das Profil erstreckt sich entlang einer Längsachse 60. In der vorliegenden Ausführungsform hat das Profil einen quadratischen Aussenquerschnitt, wobei sich an jeder Seite eine Nut oder ein Kanal 61 in Richtung der Längsachse 60 von der Oberfläche 62 in das Profil erstreckt. Die Form des Querschnittes des Profils 6 und 7 und die Anzahl der Kanäle 61 sind unwesentlich. Wichtig ist, dass mindestens ein Kanal 61 angeordnet ist, welcher sich in Richtung der Längsachse 60 erstreckt. Der am Profil angeordneter Kanal 61 dient der Aufnahme von Elementen der Klemmelemente 2 und 3 und ein anderer am Profil angeordneter Kanal 61 dient der Aufnahme von Paneelen oder anderen im Messebau verwendeten Elementen. Die Profilstücke 6 und 7 müssen nicht zwingend baugleich sein.

Der Kanal 61 erstreckt sich von der Oberfläche 62 mit einem ersten Abschnitt 64 und einem anschliessend angeordneten zweiten Abschnitt 65 in das Profilstück hinein. Der erste Abschnitt 64 weist einen kleineren Querschnitt als der zweite Abschnitt 65 auf. Mit anderen Worten kann auch gesagt werden, dass der Kanal 61 die Form eines hinterschnittenen Kanals aufweist, wobei die Hinterschneidung durch den zweiten Abschnitt 65 gebildet wird und durch in den Kanal ragende Stege 66 im Bereich des den ersten Abschnitt 64 begrenzt wird. In dieser Ausführungsform verjüngt sich der zweite Abschnitt 65 in senkrechter Richtung zur Längsachse 60 des Profils.

In anderen Ausführungsformen kann der Kanal 61 beispielsweise die Form einer T-Nut haben. Dabei würde der zweite Abschnitt 65 mit einem konstanten Querschnitt verlaufen.

In der Figur 3 wird die Wirkung der Halteseiten 22, 32 gezeigt. Über die Halteseiten 22, 32 wird eine Halteverbindung zwischen dem ersten Profilstück 6 und dem zweiten Profilstück 7 bereitgestellt. Dabei drückt das Federmittel 4 das erste Klemmelement 2 vom zweiten Klemmelement 3 weg, wobei das Verbindungselement 1 über die jeweilige Halteseite 22 bzw. 32 am Steg 66 des Kanals 61 des jeweiligen Profilstückes 6 bzw. 7 ansteht. In der vorliegenden Ausführungsform ragen die Stege 66 in die Ausnehmungen 221 bzw. 321 der jeweiligen Halteseite 22, 32 ein. Durch das Anordnen von den Ausnehmungen 221, welche sich in die Halteseiten 22, 32 erstrecken, kann die Halteverbindung weiter verbessert werden. Die Ausnehmungen 221, 231 weisen dabei eine zum Steg 66 komplementäre Form auf, so dass dieser in entsprechende Ausnehmung 220 einragen kann.

Die Halteverbindung wird also im wesentlichen über die Kraft des Federmittels 5 und über die Ausnehmung 221 bzw. 231 bereitgestellt. Der Benutzer kann ein oder mehrere Verbindungselemente 1 vorbereitend mit dem entsprechenden Profilstück verbinden. Die Verbindung ist dabei kraftschlüssig über die aus der Federkraft resultierenden Reibungskraft zwischen den Halteseiten 22, 32 und dem jeweiligen Steg 66 bereitgestellt.

In einer alternativen Ausführungsform kann auf die Ausnehmung verzichtet werden, wobei dann die Fläche 220 bzw. 320 mit dem Steg 66 im Eingriff ist. Hierbei wird im wesentlichen eine kraftschlüssige Halteverbindung zwischen dem Verbindungselement 1 und den Profilen 6 und 7 bereitgestellt. Durch ein winkliges Anordnen der Fläche 220 bzw. 320 kann die Halteverbindung weiter verbessert werden.

Ferner kann in der Figur 3 erkannt werden, dass die Anschlagflächen 26 und 36 mit den Oberfläche 62 des ersten Profils 6 bzw. des zweiten Profils 7 in Verbindung stehen.

Durch eine Betätigung des Betätigungselementes 5 kann das Verbindungselement 1 vom Zustand der Halteverbindung in den Zustand der Klemmverbindung betätigt werden. Durch das Anordnen von mehreren Verbindungselementen 1 kann während des Herstellens der Klemmverbindung ein Verschieben der beiden Profile relativ zueinander verhindert werden.

Über die Klemmseiten 21, 31 wird dabei eine Klemmwirkung zwischen dem Verbindungselement 1 und dem jeweiligen Profilstück 6 bzw. 7 bereitgestellt. Die Wirkung der Klemmseiten 21, 31 wird in der Figur 4 gezeigt. Durch das Betätigungselement 5 können die beiden Klemmelemente 2 und 3 relativ zueinander verschoben werden, so dass ausgehend von der Halteverbindung in einem ersten Schritt der Eingriff zwischen den Halteseiten 22, 32 gelöst wird und in einem zweiten Schritt die Klemmseiten 21, 31 mit dem Steg 66 Kanal 61 in Verbindung kommen und eine Klemmverbindung zwischen den Klemmelementen 2 und 3 und dem Kanal 61 bereitstellen. Dabei hintergreifen hakenförmig ausgebildete Klemmseiten den Steg 61. Der Steg 61 steht dann im wesentlichen mit der ersten Fläche 210 bzw. 310 und der zweiten Fläche 211 bzw. 311 in Verbindung.

Unter einer Klemmverbindung wird eine Verbindung verstanden, welche zum Übertragen von grösseren Kräften ausgelegt ist, als die Halteverbindung. Da meist mehrere Verbindungselemente 1 angeordnet werden, verschieben sich die Profilstücke 6 und 7 zwischen dem Zustand der Halteverbindung und demjenigen der Klemmverbindung nicht zueinander.

Die winklige Anordnung der zweiten Fläche 211 bzw. 311 hat den Vorteil, dass bei der Herstellung der Klemmverbindung, insbesondere beim Auftreffen der zweiten Fläche 211 bzw. 311 auf den Steg 66, ein Verklemmen verhindert werden kann.

Im Zustand der Klemmverbindung stehen die Klemmelemente 2 und 3 vorzugsweise derart, dass sie nicht mehr über den Profilquerschnitt hervorstehen. Das heisst mit anderen Worten, dass das Verbindungselement 1 dann die gleiche Breite wie die Profile 6 bzw. 7 aufweist.

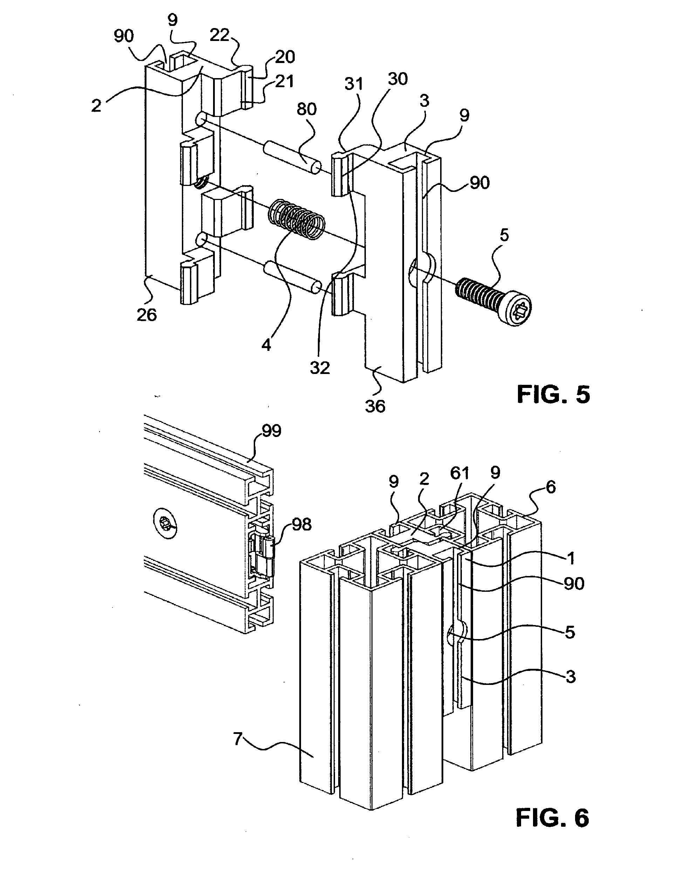

Die Figuren 5 und 6 zeigen eine weitere Ausführungsform des Verbindungselementes 1. Gleiche Teile sind dabei mit gleichen Bezugszeichen versehen. Insbesondere sei darauf hingewiesen, dass die Funktion bezüglich der Halteverbindung und der Klemmverbindung des Verbindungselementes 1 wie oben beschrieben identisch ist.

Das Verbindungselement 1 umfasst hier einen Funktionsabschnitt 9. Der Funktionsabschnitt 9 ist in dieser Ausführungsform am ersten Klemmelement 2 bzw. am zweiten Klemmelement 3 gegenüber den Verbindungsstücken 30, 40 angeordnet und umfasst im wesentlichen einen hinterschnittenen Kanal 90. Der hinterschnittene Kanal 90 hat dabei die Form einer T-Nut, welche sich parallel zu den Anschlagflächen 26 erstreckt über die gesamte Höhe des Verbindungselementes 1 erstreckt.

Wie in der Figur 6 gezeigt, dient der hinterschnittene Kanal 90 der Aufnahme von einem weiteren Verbindungselement 98, hier ein aus dem Stand der Technik bekanntes Hakenverbindungselement 98, das mit einem Profil 99 in Verbindung steht.

Im Zusammenhang mit der Figur 6 sei zudem erwähnt, dass der Kanal 61 in den Profilen 6 und 7 hier die Form einer T-Nut hat.

Durch das Anordnen eines derartigen Funktionsabschnittes kann das Verbindungselement 1 besonders flexibel eingesetzt werden. Insbesondere kann mindestens ein zusätzliches Profil senkrecht zu den beiden Profilen 6 und 7 angeordnet werden.

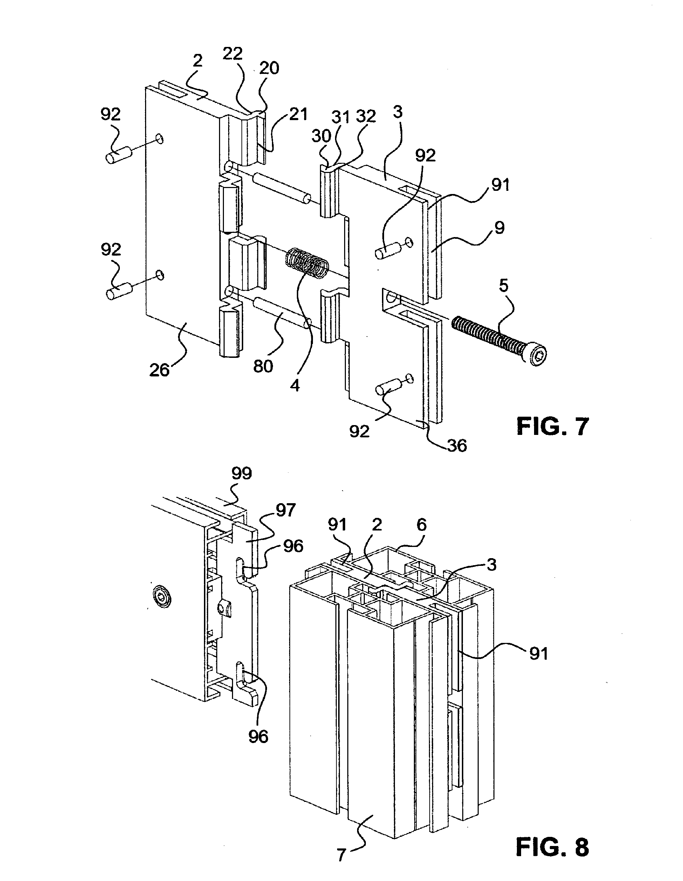

Die Figuren 7 und 8 zeigen eine weitere Ausführungsform des Verbindungselementes 1. Gleiche Teile sind dabei mit gleichen Bezugszeichen versehen. Der Funktionsabschnitt 9 umfasst hier einen mit einem konstanten Querschnitt verlaufenden Kanal 91. Der Kanal 91 wird durch zwei Haltestifte 92 durchdrungen. Die Haltestifte 92 bilden dabei eine Aufnahme eines komplementär ausgebildeten Verbindungselementes 97, welches Ausnehmungen 96 umfasst. Das Verbindungselement 97 kann dabei über die beiden Ausnehmungen 96 in die beiden Haltestifte 92 eingehängt werden.

Vorzugsweise sind die Klemmelemente 2 und 3 aus Aluminium. Besonders bevorzugt werden die Klemmelemente 2 und 3 mittels eines Aluminium-Druckgussverfahrens gefertigt. Die Klemmelement 2 und 3 können aber auch aus Stahl oder einem anderen Werkstoff gefertigt sein.

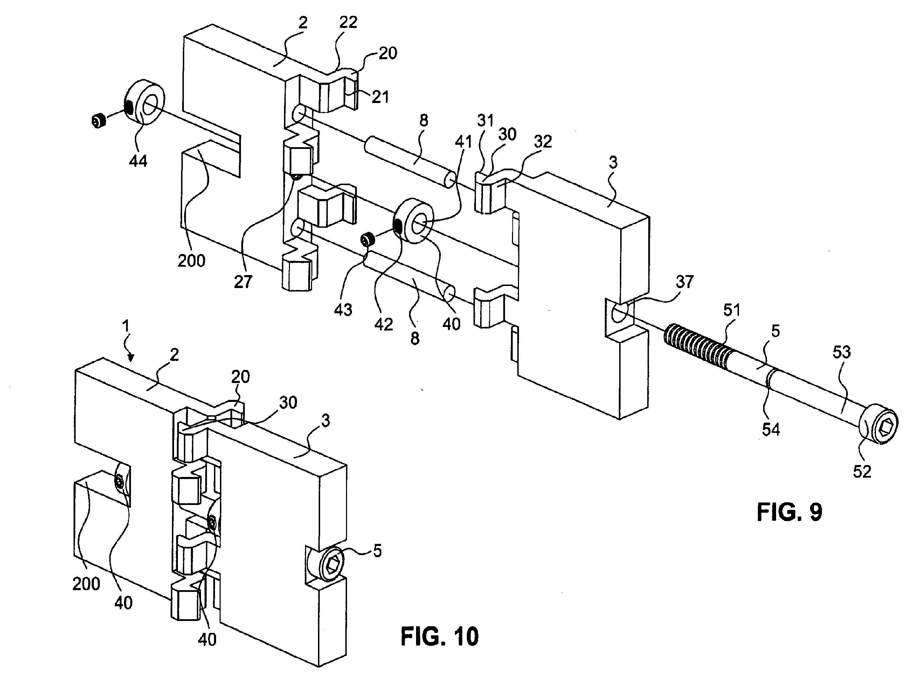

Figuren 9 und 10 zeigen ein viertes Ausführungsbeispiel eines Verbindungselementes 1 gemäss der vorliegenden Erfindung. Gleiche Teile sind dabei mit gleichen Bezugszeichen versehen. Ferner sind die Merkmale, die im Zusammenhang mit den vorhergehend beschriebenen Ausführungsbeispielen erwähnt worden sind, ebenfalls auf dieses Ausführungsbeispiel anwendbar.

Das erste Klemmelement 2 und das zweite Klemmelement 3, welche beide hier etwas vereinfacht dargestellt sind, sind im wesentlichen zu den vorhergehend beschriebenen Klemmelementen identisch ausgebildet.

Die Schraube 5 umfasst hier ein Gewinde 51, ein zylindrisch ausgebildeter Schaft 53 und einen Schraubenkopf 52. Der zylindrisch ausgebildete Schaft 53 ist zwischen dem Gewinde 51 und dem Schraubenkopf 52 angeordnet. Ferner ist im Bereich des Schaftes 53 eine Rille 54 angeordnet, welche sich von der Oberfläche in den Schaft 53 erstreckt.

Zwischen dem ersten Klemmelement 2 und dem zweiten Klemmelement 3 ist ein innerer erster Sicherungsring 40 angeordnet, mit welchem die Schraube 5 bezüglich des zweiten Klemmelements 3 gesichert werden kann. Der Sicherungsring 40 entspricht dabei dem Element, welches eine Relativbewegung zwischen den beiden Klemmelementen 2, 3 voneinander weg unterstützt. Der Sicherungsring 40 ist im wesentlichen als zylindrischer Körper ausgebildet, welcher eine Öffnung 41 aufweist, die sich entlang der Mittelachse des zylindrischen Körpers durch den letzteren erstreckt. Ferner umfasst der Sicherungsring 40 eine Gewindeöffnung 42, welche sich senkrecht zur Mittelachse in die Öffnung 41 erstreckt und zur Aufnahme einer Stiftschraube 43 dient.

Im zusammengefügten Zustand ragt die Schraube 5 durch die Öffnung 37 des zweiten Klemmelementes 3 hindurch. Der Schraubenkopf 52 wird dabei durch die Ausnehmung 34 aufgenommen. Auf der der Ausnehmung 34 gegenüberliebenden Oberfläche liegt der Sicherungsring 40 an, welcher mit der Schraube 5 in Verbindung steht. Dabei wirkt die Stiftschraube 43 auf den Schaft 53, insbesondere in die Rille 54. Der Sicherungsring 40 und der Schraubenkopf 51 sichern die Schraube in axialer Richtung zum Klemmelement 3. Die Schraube 5 kann demnach um ihre Mittelachse verdreht werden, nicht aber entlang ihrer Mittelachse verschoben werden.

Die Schraube 5 steht über das Gewinde 51 mit dem ersten Klemmelement 2 in Verbindung. Durch eine Drehung der Schraube 5 lassen sich die beiden Klemmelemente 2 und 3 aufeinander zu bewegen. Aufgrund der axialen Sicherung der Schraube 5 im zweiten Klemmelement 3 können die beiden Klemmelemente bei einer Drehung der Schraube 5 in die entsprechende Richtung voneinander weg bewegt werden. Dabei ist die relative Positionierung des ersten Klemmelementes 2 zum zweiten Klemmelement 3 jederzeit durch das Anordnen des Sicherungsrings 40 definiert.

In einer alternativen Ausführungsform kann zudem ein äusserer Sicherungsring 44 angeordnet sein, welcher in einer Ausnehmung 200 im ersten Klemmelement 2 angeordnet ist. Dabei wirkt der zweite Sicherungsring 44 auf das Gewinde 51 der Schraube 2 und sorgt dafür, dass die Schraube 5 nicht derart weit verdreht werden kann, dass sich diese aus der Gewindeöffnung 27 des ersten Klemmelementes 2 herausdrehen kann.

Alternativ können die beiden Sicherungsringe auch eine andere Form aufweisen. Beispielsweise ist es denkbar, dass ein Segerring oder ähnliches Element eingesetzt wird.

**BEZUGSZEICHENLISTE**

| | | | |
|---|---|---|---|
| 1 | Verbindungselement | 43 | Stiftschraube |
| 2 | erstes Klemmelement | 44 | äusserer Sicherungsring |
| 3 | zweites Klemmelement | 51 | Gewinde |
| 4 | Federmittel | 52 | Schraubenkopf |
| 5 | Betätigungselement | 53 | Schaft |
| 6 | erstes Profilstück | 54 | Rille |
| 7 | zweites Profilstück | 60 | Längsachse |
| 8 | Führungselemente | 61 | Kanal |
| 9 | Funktionsabschnitt | 62 | Oberfläche |
| 20 | Verbindungsstück | 64 | erster Abschnitt |
| 21 | Klemmseite | 65 | zweiter Abschnitt |
| 22 | Halteseite | 66 | Steg |
| 23 | Basiselement | 80 | Führungsstifte |
| 24 | Führungsöffnungen | 81 | Führungsöffnung |
| 26 | Anschlagflächen | 90 | hinterschnittener Kanal |
| 27 | Gewindeöffnung | 91 | Kanal |
| 28 | abgeschrägte Kanten | 92 | Haltestifte |
| 29 | Stirnfläche | 97 | Verbindungselement |
| 30 | Verbindungsstück | 98 | weiteres Profil |
| 31 | Klemmseite | 99 | weiteres Verbindungselement |
| 32 | Halteseite | 210 | erste Fläche |
| 33 | Basiselement | 211 | zweite Fläche |
| 34 | Ausnehmung | 212 | weitere Flächen |
| 36 | Anschlagflächen | 220 | Fläche |
| 37 | Durchgangsöffnung | 221 | Ausnehmung |
| 38 | abgeschrägte Kanten | 310 | erste Fläche |
| 39 | Stirnfläche | 311 | zweite Fläche |
| 40 | innerer Sicherungsring | 312 | weitere Flächen |
| 41 | Öffnung | 320 | Fläche |
| 42 | Gewindeöffnung | 321 | Ausnehmung |

## Patentansprüche

1. Verbindungselement zum lösbaren Verbinden zweier entlang ihrer jeweiligen Längsachse (60) parallel verlaufender Abschnitte von Profilen (6, 7), die aufeinanderzugewandte Oberflächen (62) aufweisen, in denen jeweils ein länglich hinterschnittener Kanal (61) vorgesehen ist, **dadurch gekennzeichnet,**
**dass** das Verbindungselement (1) ein erstes Klemmelement (2) und ein zweites Klemmelement (3) aufweist,
**dass** das erste Klemmelement (2) über zwei gegenüberliegende äussere Anschlagflächen (26) für die besagten Abschnitte der beiden Profile verfügt, wobei die entsprechenden gegenüberliegenden Anschlagflächen (36) des zweiten Klemmelementes (3) mit denen des ersten Klemmelementes (2) fluchten,
**dass** jedes Klemmelement (2, 3) mindestens ein Verbindungsstück (20, 30) umfasst, welches aus einer der Anschlagflächen (26, 36) herausragt und eine auf die Ebene der besagten Anschlagfläche gerichtete Klemmseite (21, 31) aufweist, wobei mindestens jeweils ein Verbindungsstück (20, 30) aus einer anderen der gegenüberliegenden Anschlagflächen (26, 36) übersteht, so dass diese in den Kanal (61) des einen Profilstückes (6) und das andere in den Kanal (61) des anderen Profilstückes (7) einragen können,
**dass** das erste Klemmelement (2) bezüglich dem zweiten Klemmelement (3) in der Richtung der Ebene der Anschlagflächen (26, 36) verschieblich ist,
**dass** ein Betätigungselement (5) vorgesehen ist, welches die Relativbewegung der Klemmelemente (2, 3) zueinander begrenzt und mit dem der Abstand der Klemmelemente (2, 3) für ein Hintergreifen der Profilabschnitte durch die Klemmseiten (21, 31) für eine Klemmverbindung zueinander einstellbar ist.

2. Vorrichtung nach Anspruch 1, **dadurch gekennzeichnet, dass** weiterhin ein Element (4, 40) vorgesehen ist, um eine Relativbewegung zwischen den beiden Klemmelementen (2, 3) voneinander weg zu unterstützen.

3. Vorrichtung nach einem der vorhergehenden Ansprüche, **dadurch gekennzeichnet, dass** das die Relativbewegung unterstützende Element ein Sicherungselement, wie ein Sicherungsring (40), ist, welcher mit dem Betätigungselement (5) derart in Verbindung steht, dass das Betätigungselement (5) bezüglich einer Bewegung in Richtung der Mittelachse des Betätigungselementes (5) fest mit dem zweiten Klemmelement (3), verbunden ist, wobei das Betätigungselement (5) zum Klemmelement (3) verdrehbar ist.

4. Vorrichtung nach einem der vorhergehenden Ansprüche, **dadurch gekennzeichnet, dass** das die Relativbewegung unterstützende Element ein Federmittel (4) ist, welches zwischen dem ersten Klemmelement und dem zweiten Klemmelement (3) angeordnet ist, und so die beiden Klemmelemente (2, 3) auseinanderdrückt.

5. Vorrichtung nach einem der vorhergehenden Ansprüche, **dadurch gekennzeichnet, dass** mindestens ein Verbindungsstück (20, 30) eine auf die Ebene der besagten Anschlagfläche (26, 36) gerichtete Halteseite (22, 32) aufweist, die bezüglich der Klemmseite auf der anderen Seite am Verbindungsstück (20, 30) vorgesehen ist.

6. Vorrichtung nach einem der vorhergehenden Ansprüche, **dadurch gekennzeichnet, dass** die Klemmseite (21, 31) im Querschnitt gesehen hakenförmig ausgebildet ist, wobei sich eine erste Fläche (210, 310) senkrecht zur Ebene der Anschlagfläche (26, 36) und eine sich der ersten Fläche (210, 310) anschliessende zweite Fläche (211, 221) parallel oder in einem flachen Winkel im Bereich von 1° bis 10°, insbesondere in einem Bereich von 3° bis 8°, besonderes bevorzugt bei 5°, zur Anschlagfläche (26, 36) verläuft, wobei der Kanal (61) mit der zweiten Fläche (211, 221) der Klemmseite (21, 31) hintergreifbar ist.

7. Vorrichtung nach einem der vorhergehenden Ansprüche, **dadurch gekennzeichnet, dass** die Halteseite (22, 32) eine Ausnehmung (221, 321) umfasst, wobei der Kanal (61) mit der Ausnehmung (221, 321) hintergreifbar ist.

8. Vorrichtung nach einem der vorhergehenden Ansprüche, **dadurch gekennzeichnet, dass** die zweite Fläche (211, 221) der Klemmseite (21, 31) fluchtend mit Teilen der Ausnehmung (221,321) der Halteseite (22,32) ist.

9. Vorrichtung nach einem der vorhergehenden Ansprüche, **dadurch gekennzeichnet, dass** jedes Klemmelement (2, 3) über mindestens ein Paar von Verbindungsstücken (20, 30) verfügt, wobei jeweils ein Verbindungsstück (20, 30) die eine Anschlagfläche (26) überragt und wobei das andere Verbindungsstück (20, 30) die andere Anschlagfläche (26) überragt, welche der vorherigen gegenüberliegend angeordnet ist.

10. Vorrichtung nach Anspruch 9, **dadurch gekennzeichnet, dass** in Richtung der Anschlagfläche (26, 36) mehrere paarweise angeordnete Verbindungsstücke (20, 30) angeordnet sind.

11. Vorrichtung nach einem der vorhergehenden Ansprüche, **dadurch gekennzeichnet, dass** die Verbindungsstücke (20, 30) in einer Richtung senkrecht zur Anschlagfläche (26, 36) gesehen versetzt oder deckungsgleich zueinander angeordnet sind.

12. Vorrichtung nach einem der vorhergehenden Ansprüche, **dadurch gekennzeichnet, dass** Führungselemente (8) vorgesehen sind, welche eine Führung zwischen dem ersten Klemmelement (2) und dem zweiten Klemmelement (3) bereitstellen.

13. Vorrichtung nach einem der vorhergehenden Ansprüche, **dadurch gekennzeichnet, dass** das Betätigungsmittel (5) ein Schraube ist, welche durch eine Durchgangsöffnung (37) durch das eine Klemmelement (3) ragt und mit einer Gewindeöffnung (28) im anderen Klemmelement (2) im Eingriff ist, wobei bei einer Drehung der Schraube, die Klemmeelemente (2, 3) relativ zueinander verschiebbar sind.

14. Vorrichtung nach einem der vorhergehenden Ansprüche, **dadurch gekennzeichnet, dass** die Anschlagflächen (26, 36) Oberflächen eines quaderförmigen Basiselementes (23, 33) sind, wobei die Verbindungsstücke (30, 40) dem Basiselement (23, 33) angeformt sind und sich über diese Oberflächen vom Basiselement (23, 33) erstrecken.

15. Vorrichtung nach einem der vorhergehenden Ansprüche, **dadurch gekennzeichnet, dass** die Verbindungsstücke (30, 40) in Richtung der Anschlagsfläche (26, 36) quer zur Bewegungsrichtung der Klemmelemente (2, 3) eine Länge aufweisen, die kleiner als die halbe Länge des Klemmelementes (2, 3) ist, insbesondere liegt die Länge der Verbindungsstücke (30, 40) aber im Bereich von 1/8 bis 1/3, besonders bevorzugt 1/6 bis 1/4 der Länge des Klemmelementes (2, 3).

16. Vorrichtung nach einem der vorhergehenden Ansprüche, **dadurch gekennzeichnet, dass** das erste Klemmelement (2) und/oder das zweite Klemmelement (3) auf der den Verbindungsstücken (20, 30) gegenüberliegenden Seiten Funktionselemente (9) umfassen.

17. Vorrichtung nach Anspruch 16, **dadurch gekennzeichnet, dass** das Funktionselement (9) ein hinterschnittener Kanal (90) ist und/oder dass das Funktionselement (9) ein Kanal (91) ist, welcher mit Haltestiften (92) durchdrungen wird, wobei die Kanäle zur Aufnahme von weiteren Verbindungselementen (97, 98) vorgesehen sind.

18. Vorrichtung nach einem der vorhergehenden Ansprüche, **dadurch gekennzeichnet, dass** die Breite von den Verbindungsstücken (20. 30) kleiner ist als die Breite des Kanals (61), so dass die Verbindungsstücke (20, 30) in den Kanal (61) einführbar sind.

## Claims

1. Connection element for releasably connecting two portions of profiles (6, 7) which run in parallel along their respective longitudinal axis (60), and which display surfaces (62) which face one another and in which in each case a duct (61) which is undercut in an elongate manner is provided, **characterized in**
**that** the connection element (1) displays a first clamping element (2) and a second clamping element (3),
**that** the first clamping element (2) for said portions of the two profiles disposes of two outer stop faces (26) which lie opposite one another, wherein the corresponding opposite stop faces (36) of the second clamping element (3) are aligned with those of the first clamping element (2),
**that** each clamping element (2, 3) comprises at least one connection piece (20, 30), which protrudes from one of the stop faces (26, 36) and displays a clamping side (21, 31) which is directed towards the plane of said stop face, wherein at least in each case one connection piece (20, 30) projects from another of the opposite stop faces (26, 36), such that said connection piece can protrude into the duct (61) of the one profile piece (6) and the other into the duct (61) of the other profile piece (7),
**that** the first clamping element (2) is displaceable in relation to the second clamping element (3) in the direction of the plane of the stop faces (26, 36),
**that** an actuation element (5) is provided, which actuation element (5) limits the relative movement of the clamping elements (2, 3) in relation to one another and by way of which, in order for the clamping sides (21, 31) to engage behind the profile sections in order to form a clamping connection, the spacing of the clamping elements (2, 3) in relation to one another is adjustable.

2. Device according to Claim 1, **characterized in that** furthermore an element (4, 40) for supporting relative movement away from one another between the two clamping elements (2, 3) is provided.

3. Device according to one of the preceding claims, **characterized in that** the element which supports the relative movement is a securing element, such as a securing ring (40), which is connected to the actuation element (5) in such a manner that the actuation element (5) in relation to a movement in the direction of the central axis of the actuation element (5) is fixedly connected to the second clamping element (3), wherein the actuation element (5) is rotatable in relation to the clamping element (3).

4. Device according to one of the preceding claims, **characterized in that** the element which supports the relative movement is a spring means (4) which is disposed between the first clamping element and the second clamping element (3) and in this manner pushes apart the two clamping elements (2, 3).

5. Device according to one of the preceding claims, **characterized in that** at least one connection piece (20, 30) displays a retaining side (22, 32) which is directed towards the plane of said stop face (26, 36) and which in relation to the clamping side is provided on the other side on the connection piece (20, 30).

6. Device according to one of the preceding claims, **characterized in that** the clamping side (21, 31), when viewed in cross section, is configured so as to be hook-shaped, wherein a first face (210, 310) runs perpendicular to the plane of the stop face (26, 36), and a second face (211, 221) which adjoins the first face (210, 310) runs parallel to or at a flat angle in the range of 1° to 10°, in particular in a range of 3° to 8°, particularly preferably at 5° in relation to the stop face (26, 36), wherein the duct (61) is engageable from behind by way of the second face (211, 221) of the clamping side (21, 31).

7. Device according to one of the preceding claims, **characterized in that** the retaining side (22, 32) comprises a clearance (221, 321), wherein the duct (61) is engageable from behind by way of the clearance (221, 321).

8. Device according to one of the preceding claims, **characterized in that** the second face (211, 221) of the clamping side (21, 31) is aligned with parts of the clearance (221, 321) of the retaining side (22, 32).

9. Device according to one of the preceding claims, **characterized in that** each clamping element (2, 3) disposes of at least one pair of connection pieces (20, 30), wherein in each case one connection piece (20, 30) protrudes beyond the one stop face (26), and wherein the other connection piece (20, 30) protrudes beyond the other stop face (26) which is disposed opposite the former.

10. Device according to Claim 9, **characterized in that** a plurality of connection pieces (20, 30) which are disposed in pairs are disposed in the direction of the stop face (26, 36).

11. Device according to one of the preceding claims, **characterized in that**, when viewed in a direction which is perpendicular to the stop face (26, 36), the connection pieces (20, 30) are disposed in an offset or congruent manner in relation to one another.

12. Device according to one of the preceding claims, **characterized in that** guide elements (8) which provide guiding between the first clamping element (2) and the second clamping element (3) are provided.

13. Device according to one of the preceding claims, **characterized in that** the actuation means (5) is a screw which protrudes through a through-opening (37) through the one clamping element (3) and by way of a threaded opening (28) engages in the other clamping element (2), wherein by way of rotation of the screw the clamping elements (2, 3) are displaceable in relation to one another.

14. Device according to one of the preceding claims, **characterized in that** the stop faces (26, 36) are surfaces of a rectangular-block shaped basic element (23, 33), wherein the connection pieces (20, 30) are moulded onto the basic element (23, 33) and extend from the basic element (23, 33) across these surfaces.

15. Device according to one of the preceding claims, **characterized in that** the connection pieces (20, 30), in the direction of the stop face (26, 36) and transverse to the direction of movement of the clamping elements (2, 3) display a length which is smaller than half the length of the clamping element (2, 3); however, the length of the connection pieces (20, 30) is in particular in the range of 1/8 to 1/3, preferably 1/6 to 1/4, of the length of the clamping element (2, 3).

16. Device according to one of the preceding claims, **characterized in that** the first clamping element (2) and/or the second clamping element (3) comprise(s) functional elements (9) on the sides which are opposite the connection pieces (20, 30).

17. Device according to Claim 16, **characterized in that** the functional element (9) is an undercut duct (90) and/or that the functional element (9) is a duct (91) which is penetrated by retaining pins (92), wherein the ducts are provided for receiving further connection elements (97, 98).

18. Device according to one of the preceding claims, **characterized in that** the width of the connection pieces (20, 30) is smaller than the width of the duct (61), such that the connection pieces (20, 30) are insertable into the duct (61).

## Revendications

1. Élément de liaison pour relier de manière amovible deux portions de profilés (6, 7) s'étendant parallèlement le long de leur axe longitudinal (60) respectif, qui comprennent des surfaces (62) orientées l'une vers l'autre, dans lesquelles est prévu respectivement un canal (61) en contre-dépouille de manière allongée, **caractérisé en ce que** l'élément de liaison (1) comprend un premier élément de serrage (2) et un deuxième élément de serrage (3),
**en ce que** le premier élément de serrage (2) possède deux faces de butée (26) extérieures opposées pour lesdites portions des deux profilés, les faces de butée (36) opposées correspondantes du deuxième élément de serrage (3) étant alignées avec celles du premier élément de serrage (2),
**en ce que** chaque élément de serrage (2, 3) comporte au moins une pièce de liaison (20, 30), laquelle fait saillie à partir de l'une des faces de butée (26, 36) et comprend un côté de serrage (21, 31) tourné vers le plan de ladite face de butée, au moins une pièce de liaison (20, 30) dépassant respectivement d'une autre face de butée parmi les faces de butée opposées (26, 36), de telle sorte que celle-ci puisse faire saillie dans le canal (61) de l'une des pièces profilées (6) et que l'autre puisse faire saillie dans le canal (61) de l'autre pièce profilée (7),
**en ce que** le premier élément de serrage (2) est mobile par rapport au deuxième élément de serrage (3) dans la direction du plan des faces de butée (26, 36),
**en ce qu'**un élément d'actionnement (5) est prévu, lequel limite le mouvement relatif des éléments de serrage (2, 3) l'un par rapport à l'autre et à l'aide duquel l'espacement des éléments de serrage (2, 3) l'un par rapport à l'autre peut être réglé pour une entrée en prise par l'arrière des portions de profilé par les côtés de serrage (21, 31) pour une liaison par serrage.

2. Dispositif selon la revendication 1, **caractérisé en ce qu'**en outre un élément (4, 40) est prévu, afin de favoriser un mouvement relatif à l'écart l'un de l'autre entre les deux éléments de serrage (2, 3).

3. Dispositif selon l'une quelconque des revendications précédentes, **caractérisé en ce que** l'élément favorisant le mouvement relatif est un élément de fixation tel qu'une bague de fixation (40), laquelle est en liaison avec l'élément d'actionnement (5) de telle sorte que l'élément d'actionnement (5) soit, par rapport à un mouvement dans la direction de l'axe médian de l'élément d'actionnement (5), relié fixement au deuxième élément de serrage (3), l'élément d'actionnement (5) pouvant être tourné par rapport à l'élément de serrage (3).

4. Dispositif selon l'une quelconque des revendications précédentes, **caractérisé en ce que** l'élément favorisant le mouvement relatif est un moyen ressort (4), lequel est disposé entre le premier élément de serrage et le deuxième élément de serrage (3) et écarte ainsi l'un de l'autre les deux éléments de serrage (2, 3).

5. Dispositif selon l'une quelconque des revendications précédentes, **caractérisé en ce qu'**au moins une pièce de liaison (20, 30) comprend un côté de retenue (22, 32) tourné vers le plan de ladite face de butée (26, 36), lequel côté de retenue est prévu, par rapport au côté de serrage, de l'autre côté de la pièce de liaison (20, 30).

6. Dispositif selon l'une quelconque des revendications précédentes, **caractérisé en ce que** le côté de serrage (21, 31) est réalisé en forme de crochet vu en section transversale, une première face (210, 310) s'étendant perpendiculairement au plan de la face de butée (26, 36) et une deuxième face (211, 221) se raccordant à la première face (210, 310) s'étendant parallèlement ou suivant un angle plat dans la plage de 1° à 10°, en particulier dans une plage de 3° à 8°, de manière particulièrement préférée de 5°, par rapport à la face de butée (26, 36), le canal (61) pouvant être engagé par l'arrière à l'aide de la deuxième face (211, 221) du côté de serrage (21, 31).

7. Dispositif selon l'une quelconque des revendications précédentes, **caractérisé en ce que** le côté de retenue (22, 32) comporte un évidement (221, 321), le canal (61) pouvant être engagé par l'arrière à l'aide de l'évidement (221, 321).

8. Dispositif selon l'une quelconque des revendications précédentes, **caractérisé en ce que** la deuxième face (211, 221) du côté de serrage (21, 31) est en alignement avec des parties de l'évidement (221, 321) du côté de retenue (22, 32).

9. Dispositif selon l'une quelconque des revendications précédentes, **caractérisé en ce que** chaque élément de serrage (2, 3) possède au moins une paire de pièces de liaison (20, 30), une pièce de liaison (20, 30) dépassant respectivement de l'une des faces de butée (26) et l'autre pièce de liaison (20, 30) dépassant de l'autre face de butée (26), laquelle est disposée à l'opposé de celle-ci.

10. Dispositif selon la revendication 9, **caractérisé en ce que** plusieurs pièces de liaison (20, 30) disposées par paires sont disposées dans la direction de la face de butée (26, 36).

11. Dispositif selon l'une quelconque des revendications précédentes, **caractérisé en ce que** les pièces de liaison (20, 30) sont, vues dans une direction perpendiculaire à la face de butée (26, 36), disposées de manière décalée ou en coïncidence les unes par rapport aux autres.

12. Dispositif selon l'une quelconque des revendications précédentes, **caractérisé en ce que** des éléments de guidage (8) sont prévus, lesquels produisent un guidage entre le premier élément de serrage (2) et le deuxième élément de serrage (3).

13. Dispositif selon l'une quelconque des revendications précédentes, **caractérisé en ce que** le moyen d'actionnement (5) est une vis, laquelle fait saillie à travers une ouverture traversante (37) à travers l'un des éléments de serrage (3) et est en prise dans l'autre élément de serrage (2) à l'aide d'une ouverture filetée (28), les éléments de serrage (2, 3) pouvant être déplacés l'un par rapport à l'autre lors d'une rotation de la vis.

14. Dispositif selon l'une quelconque des revendications précédentes, **caractérisé en ce que** les faces de butée (26, 36) sont des surfaces d'un élément de base parallélépipédique (23, 33), les pièces de liaison (20, 30) étant formées sur l'élément de base (23, 33) et s'étendant sur ces surfaces à partir de l'élément de base (23, 33).

15. Dispositif selon l'une quelconque des revendications précédentes, **caractérisé en ce que** les pièces de liaison (20, 30) présentent, dans la direction de la surface de butée (26, 36) transversalement à la direction de mouvement des éléments de serrage (2, 3), une longueur qui est inférieure à la moitié de la longueur de l'élément de serrage (2, 3), la longueur des pièces de liaison (20, 30) se situant cependant en particulier dans la plage de 1/8 à 1/3, de manière particulièrement préférée de 1/6 à 1/4, de la longueur de l'élément de serrage (2, 3).

16. Dispositif selon l'une quelconque des revendications précédentes, **caractérisé en ce que** le premier élément de serrage (2) et/ou le deuxième élément de serrage (3) comprend/comprennent des éléments fonctionnels (9) sur les côtés opposés aux pièces de liaison (20, 30).

17. Dispositif selon la revendication 16, **caractérisé en ce que** l'élément fonctionnel (9) est un canal en contre-dépouille (90) et/ou **en ce que** l'élément fonctionnel (9) est un canal (91), lequel est traversé par des goupilles de retenue (92), les canaux étant prévus pour la réception d'éléments de liaison (97, 98) supplémentaires.

18. Dispositif selon l'une quelconque des revendications précédentes, **caractérisé en ce que** la largeur des pièces de liaison (20, 30) est inférieure à la largeur du canal (61), de telle sorte que les pièces de liaison (20, 30) puissent être insérées dans le canal (61).
